# EUROPÄISCHE PATENTSCHRIFT

(11) **EP 3 552 294 B1**
(45) Veröffentlichungstag und Bekanntmachung des Hinweises auf die Patenterteilung: **24.02.2021**
(21) Anmeldenummer: 17816671.6
(22) Anmeldetag: 08.12.2017
(51) Int. Cl.: H02J 7/00, H02J 7/14

(54) **LADEN EINER BATTERIE VON DEM BORDNETZ EINES KRAFTFAHRZEUGS DIE NICHT TEIL DAVON IST**
CHARGING A BATTERY FROM THE POWER SUPPLY OF A MOTOR VEHICLE THAT IS NOT PART OF IT
CHARGE D'UNE BATTERIE DEPUIS L'ALIMENTATION ÉLECTRIQUE D'UN VÉHICULE À MOTEUR, LA BATTERIE NE FAISANT PARTIE DUDIT VÉHICULE

(30) Priorität: 09.12.2016 DE 102016224644
(43) Veröffentlichungstag der Anmeldung: 16.10.2019
(73) Patentinhaber: HELLA GmbH & Co. KGaA, 59557 Lippstadt (DE); LEONI Bordnetz-Systeme GmbH, 97318 Kitzingen (DE)
(72) Erfinder: KAHNT, Sebastian, 97753 Karlstadt (DE); LIEBSCHER, Hans-Joachim, 97080 Würzburg (DE); NIGMANN, Magnus, 97941 Tauberbischofsheim (DE); ULJANOW, Ilja, 97084 Würzburg (DE)
(74) Vertreter: FDST Patentanwälte
(86) Internationale Anmeldenummer: PCT/EP2017/082104
(87) Internationale Veröffentlichungsnummer: WO 2018/104539

(56) Entgegenhaltungen:
- EP-A1- 1 174 976
- DE-A1-102009 028 147

## Beschreibung

Die Erfindung betrifft ein Kraftfahrzeug, insbesondere einen Personenkraftwagen, aufweisend ein Bordnetz mit einer Anzahl elektrischer Verbraucher, mit einem Generator sowie mit einem Bordnetz-Akkumulator.

Die Verbreitung von Kleinstfahrzeugen, wie beispielsweise Tretrollern, Mini-Klapprollern oder Kickboards, hat zuletzt deutlich zugenommen. Dabei werden entsprechende Kleinstfahrzeuge nicht nur im Rahmen einer sportlichen Aktivität genutzt, sondern auch für den urbanen Individualverkehr. Dementsprechend werden solche Kleinstfahrzeuge insbesondere auch für die sogenannte letzte Meile genutzt, also für den Weg vom Abstellort eines Kraftfahrzeuges zum eigentlichen Ziel und zurück.

Hierbei werden zunehmend auch Kleinstfahrzeuge, insbesondere Kleinstfahrzeuge der zuvor genannten Art, entwickelt, die mit einem Elektromotor und einem Akkumulator ausgerüstet sind, die also für einen elektrischen Fahrbetrieb ausgebildet sind.

Aus der EP 1 174 976 A1 ist ein Kraftfahrzeug mit einer Ladeschnittstelle zum Laden eines Elektro-Fahrrades während des Betriebes des Kraftfahrzeugs zu entnehmen. Dadurch ist das Laden des Elektro-Fahrrades unabhängig von einer lokalen Ladestruktur.

Moderne Fahrzeuge weisen häufig ein Bordnetz mit mehreren Spannungsebenen auf. Aus der DE 20 2009 028 147 A1 ist ein Verfahren zum Betrieb eines derartigen Bordnetzes mit mehreren Spannungsebenen beschrieben, bei dem die beiden Spannungsebenen miteinander verknüpft sind.

Ausgehend hiervon liegt der Erfindung die Aufgabe zugrunde, die Nutzbarkeit von Kleinstfahrzeugen mit Elektromotor und Akkumulator für die sogenannte letzte Meile zu verbessern.

Diese Aufgabe wird erfindungsgemäß gelöst durch ein Kraftfahrzeug mit den Merkmalen des Anspruchs 1. Bevorzugte Weiterbildungen sind in den rückbezogenen Ansprüchen enthalten.

Ein entsprechendes Kraftfahrzeug ist hierbei insbesondere als sogenannter Personenkraftwagen ausgestaltet und weist ein Bordnetz, typischerweise ein Gleichspannungsbordnetz, mit zumindest einem Generator, mit zumindest einem Bordnetz-Akkumulator sowie mit einer Anzahl elektrischer Verbraucher auf. Dabei ist der Generator, also der zumindest eine Generator, typischerweise als sogenannte Lichtmaschine ausgestaltet und der Bordnetz-Akkumulator, also der zumindest eine Bordnetz-Akkumulator, ist bevorzugt als Starterbatterie und dementsprechend nicht als Antriebsbatterie oder Traktionsbatterie ausgestaltet. Zudem weist das Kraftfahrzeug eine bidirektionale Schnittstelle für zumindest einen Geräte-Akkumulator eines mobilen Gerätes auf, welche insbesondere zumindest in einigen Betriebssituationen Teil des Bordnetzes des Kraftfahrzeuges ist.

Die bidirektionale Schnittstelle und typischerweise das gesamte Bordnetz ist bzw. sind dabei derart ausgestaltet, dass der Geräte-Akkumulator, also der zumindest eine Geräte-Akkumulator, über die bidirektionale Schnittstelle an das Bordnetz ankoppelbar ist und im angekoppelten Zustand, typischerweise je nach Betriebssituation oder Betriebsmodus, einerseits durch das Bordnetz ladbar und andererseits im Bordnetz als zusätzliche Energiequelle, also zusätzlich zum Bordnetz-Akkumulator, nutzbar ist. Das heißt, dass der Geräte-Akkumulator im angekoppelten Zustand in zumindest einer Betriebssituation oder in einem Betriebsmodus als Energiequelle im Bordnetz des Kraftfahrzeuges genutzt wird und dementsprechend nicht ausschließlich als Last wirkt, die über das Bordnetz mit elektrischer Leistung versorgt wird. Eine derartige Nutzung des Geräte-Akkumulators, bei der dieser beispielsweise als zusätzlicher Energiepuffer im Bordnetz genutzt wird, ist dabei insbesondere vorteilhaft, wenn im Kraftfahrzeug Betriebszustände auftreten, bei denen kurzzeitige Leistungsspitzen auftreten, bei denen also entweder kurzzeitig große Mengen an elektrischer Energie generiert werden oder bei denen kurzzeitig große Energiemengen benötigt werden, da derartige Leistungsspitzen dann auf mehrere Akkumulatoren, also insbesondere den Bordnetz-Akkumulator und den Geräte-Akkumulator, verteilt werden können. Ein entsprechender Betriebsmodus wird hierbei beispielsweise durch eine geeignet eingerichtete Steuereinheit im Bordnetz realisiert und dementsprechend weist das Bordnetz bevorzugt eine solche Steuereinheit auf.

Durch eine solche bidirektionale Einbindung des Geräte-Akkumulator, also eines zusätzlichen Energiespeichers, in das Bordnetz des Kraftfahrzeugs kann eine intelligente Energieverteilung im Bordnetz erzielt werden. So kann beispielsweise je nach Bedarf und/oder je nach Betriebssituation oder Betriebsmodus die Rekuperationsleistung des Kraftfahrzeugs, also insbesondere die Rekuperationsleistung des Generators, zum Laden des Geräte-Akkumulators genutzt werden oder aber Energie aus dem Geräte-Akkumulator bezogen werden, um während kurzzeitiger Lastspitzen, z.B. für ein Boosten, zusätzliche elektrische Leistung bereitzustellen. Als Boosten wird hierbei üblicherweise die Nutzung des Geräte-Akkumulators als zusätzliche Energiequelle und insbesondere die parallele Nutzung des Bordnetz-Akkumulators und des Geräte-Akkumulators beispielsweise zur Bereitstellung höherer elektrischer Leistungen und somit zum Beispiel zur Deckung von Spitzen beim Leistungsbedarf bezeichnet. Die Generierung von elektrischer Leistung mittels des Generators und/oder weiterer Generatoren insbesondere zum Laden des Bordnetz-Akkumulators und/oder des Geräte-Akkumulators wiederum wird üblicherweise als Rekuperieren bezeichnet. Der zusätzliche, bidirektional eingebundene Energiespeicher, also der Geräte-Akkumulator, wird dabei in einem typischen Betrieb zwar nach und nach aufgeladen, hierbei jedoch nicht einfach nur konstant geladen, sondern zwischendurch immer wieder auch zur Versorgung (z. B. Boosten) genutzt und hierbei wieder teilweise entladen.

Die Einbindung des Geräte-Akkumulators kann dabei auf unterschiedlichen Spannungsniveaus erfolgen und erfolgt bevorzugt auf 12V oder 48V. Durch eine Einbindung des mobilen Gerätes, oder die direkte Einbindung des Geräte-Akkumulators, mit guter Kontaktierung kann zudem ein relativ hoher Strom über die bidirektionale Schnittstelle fließen, wodurch auch die benötigte Ladezeit zum Aufladen des Geräte-Akkumulators erheblich reduziert werden kann.

Wenn außerdem davon ausgegangen werden kann, dass sich das mobile Gerät mit dem Geräte-Akkumulator oder zumindest der Geräte-Akkumulator in den meisten Fällen während der Fahrt im Kraftfahrzeug befindet und der Geräte-Akkumulator über die bidirektionale Schnittstelle an das Bordnetz angebunden ist, dann lässt sich die Kapazität des Bordnetz-Akkumulators des Kraftfahrzeugs um etwa die Kapazität des zusätzlichen Energiespeichers reduzieren.

Dabei gilt es dann jedoch zu bedenken, dass das Bordnetz des Kraftfahrzeuges auch weiterhin funktionsfähig bleiben muss, wenn der Geräte-Akkumulator gerade nicht an das am Bordnetz angebunden ist. Die Funktionsfähigkeit muss dabei zwar nicht zwingend in vollem Umfang weiterhin gewährleistet sein, jedoch muss zumindest die Betriebsfähigkeit der sicherheitsrelevanten Funktionen gewährleistet sein. Das heißt, dass die Kapazität des Bordnetz-Akkumulators des Kraftfahrzeugs nicht beliebig reduziert werden kann und der Geräte-Akkumulator keinen beliebig großen Beitrag zur Gesamtkapazität beitragen kann. Daher trägt der Geräte-Akkumulator oder, sofern mehrere Geräte-Akkumulatoren vorgesehen sind, tragen die Geräte-Akkumulatoren bevorzugt maximal 75% zur Gesamtkapazität aller im Kraftfahrzeug verbauten und/oder nutzbaren und/oder einsetzbaren Ackumulatoren bei und dementsprechend trägt dann der Bordnetz-Akkumulator oder, sofern mehrere fest im Kraftfahrzeug verbaute Bordnetz-Akkumulatoren vorgesehen sind, die Bordnetz-Akkumulatoren zumindest 25% zur Gesamtkapazität bei. Weiter bevorzugt trägt der Geräte-Akkumulator bzw. tragen die Geräte-Akkumulatoren maximal 50% zur Gesamtkapazität bei.

Da eine entsprechende Reduzierung der Kapazität des Bordnetz-Akkumulators bzw. der Bordnetz-Akkumulatoren prinzipiell verschiedene Vorteile mit sich bringt, wie beispielsweise ein geringeres Gewicht, ist es weiter von Vorteil, wenn der Geräte-Akkumulator bzw. die Geräte-Akkumulatoren zumindest 20%, weiter bevorzugt zumindest 35% und insbesondere zumindest 50% zur Gesamtkapazität beiträgt bzw. beitragen.

Dabei ist aktuell von einer Gesamtkapazität zwischen 10Ah und 20 Ah auszugehen, das heißt, dass die meisten derzeit nach dem Stand der Technik hergestellten Kraftfahrzeuge, zumindest im Bereich Personenkraftwagen, mit einem Bordnetz-Akkumulator ausgestattet sind, dessen Kapazität im Bereich 10Ah bis 20 Ah liegt, oder dass zwei oder mehr Bordnetz-Akkumulatoren eingesetzt werden, deren Gesamtkapazität im Bereich 10Ah bis 20 Ah liegt. Weiter weisen typische Geräte-Akkumulatoren, also beispielsweise der Akkumulator eines sogenannten E-Bikes oder eines sogenannten Scooters, derzeit eine Kapazität im Bereich 3Ah bis 11 Ah auf.

Ausgehend davon lassen sich dann verschiedene Aufteilungen realisieren, durch welche eine vorgesehene Gesamtkapazität für ein Kraftfahrzeug erreicht wird. Ist also zum Beispiel für ein Kraftfahrzeug einer bestimmten Kraftfahrzeugklasse, einer bestimmten Baureihe oder Modellreihe, eines bestimmten Kraftfahrzeugtyps oder eines bestimmten Kraftfahrzeugmodells eine Gesamtkapazität von 20 Ah vorgesehen sowie eine bidirektionale Schnittstelle und ein mobiles Gerät mit einem Geräte-Akkumulator von 3 Ah, so wird in dieses Kraftfahrzeug gemäß dem hier vorgestellten Konzept ein Bordnetz-Akkumulator eingesetzt oder eingebaut mit einer Kapazität von 17 Ah, so dass sich die vorgesehene Gesamtkapazität von 20 Ah ergibt. Die in diesem Ausführungsbeispiel vorgesehene Gesamtkapazität von 20 Ah entspricht dabei der Kapazität eines Bordnetz-Akkumulators wie er nach dem Stand der Technik in einem Kraftfahrzeug der entsprechenden Kraftfahrzeugklasse, der entsprechenden Baureihe oder Modellreihe, des entsprechenden Kraftfahrzeugtyps oder des entsprechenden Kraftfahrzeugmodells verbaut wird und demgegenüber ist dann der Bordnetz-Akkumulator, der nach dem hier vorgestellten Konzept verbaut wird, im Bezug auf die Kapazität um 3 Ah reduziert.

Der Begriff Kraftfahrzeugklasse, kurz Fahrzeugklasse oder alternativ Fahrzeugsegment, wird dabei typischerweise für eine Gruppe Kraftfahrzeuge (verschiedener Hersteller) verwendet, die insbesondere hinsichtlich ihrer Form und ihrer Größe vergleichbar sind (z.B.: Audi A6, BMW 5er, Mercedes E-Klasse, etc.). Die Einteilung in verschiedene Kraftfahrzeugklassen sowie die Bezeichnung der Kraftfahrzeugklassen (Kompaktklasse, Mittelklasse, Oberklasse, ...) und/oder die Zuordnung von Kraftfahrzeugen in die Kraftfahrzeugklassen (z.B.: Audi A6, BMW 5er, Mercedes E-Klasse, etc. zur Oberklasse) erfolgt dabei durch unterschiedliche Institutionen, beispielsweise das Deutsche Kraftfahrt-Bundesamt oder die EU-Kommission, in unterschiedlicher Weise. Weiter wird der Begriff Kraftfahrzeugmodell typsicherweise für Kraftfahrzeuge eines Hersteller verwendet, die sich hinsichtlich ihrer Form, ihrer Größe und ihrem Aussehen sehr ähneln und/oder bei denen die gleiche Bodengruppe oder die gleiche Bezeichnung verwendet wird (z.B.: C-Klasse bei Mercedes). Die verschiedenen Modelle eines Hersteller werden dabei typischerweise verschiedenen Kraftfahrzeugklassen zugeordnet. Ein entsprechendes Kraftfahrzeugmodell wird weiter typischerweise über einen Produktionszyklus hinweg produziert und dann durch ein sogenanntes Nachfolgemodell ersetzt, welches unter der gleichen (Modell-) Bezeichung angeboten wird. Das Kraftfahrzeugmodell eines bestimmten Produktionszyklus wird üblicherweise als Baureihe oder Modellreihe bezeichnet (z.B.: W204 bei Mercedes). Der Begriff Kraftfahrzeugtyps bezeichnet schließlich ein Fahrzeug einer Baureihe mit einer bestimmten Motorisierung (Kraftfahrzeuge eines bestimmten Kraftfahrzeugtyps, Typs oder Fahrzeugtyps haben in der Regel dieselbe Schlüsselnummer oder KBA-Nummer).

Weitere Beispiele für zweckdienliche Aufteilungen sind in der nachfolgenden Tabelle aufgeführt, wobei jeweils die für das Kraftfahrzeug vorgesehene Gesamtkapazität durch zumindest einem Bordnetz-Akkumulator und zumindest einen Geräte-Akkumulator erreicht wird:

| Gesamtkapazität | Kapazität Geräte-Akkumulator | Kapazität Bordnetz-Akkumulator |
|---|---|---|
| 20Ah | 5Ah | 15Ah |
| 20Ah | 6Ah | 14Ah |
| 20Ah | 5Ah+5Ah (2 Geräte-Akkumulatoren) | 10Ah |
| 20Ah | 10Ah | 10Ah |
| 20Ah | 5Ah+5Ah (2 Geräte-Akkumulatoren) | 5Ah+5Ah (2 Bordnetz-Akkumulatoren) |
| 10Ah | 3Ah | 7Ah |
| 10Ah | 5Ah | 5Ah |

Da entsprechende mobile Geräte, entsprechende Geräte-Akkumulatoren und/oder die bidirektionale Schnittstelle in einigen Fällen ein optionales Ausstattungsmerkmal für ein Kraftfahrzeug darstellen, ist eine entsprechende Reduzierung der Kapazität des Bordnetz-Akkumulators oder der Bordnetz-Akkumulatoren bevorzugt nicht bei jedem Kraftfahrzeug einer bestimmten Kraftfahrzeugklasse, einer bestimmten Baureihe oder Modellreihe, eines bestimmten Kraftfahrzeugtyps oder eines bestimmten Kraftfahrzeugmodells realisiert. Stattdessen weisen zweckdienlicherweise nur diejenigen Kraftfahrzeuge einer bestimmten Kraftfahrzeugklasse, einer bestimmten Baureihe oder Modellreihe, eines bestimmten Kraftfahrzeugtyps oder eines bestimmten Kraftfahrzeugmodells einen Bordnetz-Akkumulator oder Bordnetz-Akkumulatoren mit einer reduzierten Kapazität auf, die auch eine entsprechende (funktionsfähige oder funktionsbereite) bidirektionale Schnittstelle aufweisen und/oder mit Geräte-Akkumulatoren ausgestattet sind. Eine bestimmte Kraftfahrzeugklasse, eine bestimmte Baureihe oder Modellreihe, ein bestimmter Kraftfahrzeugtyp (Kraftfahrzeuge eines bestimmten Typs oder Fahrzeugtyps haben in der Regel dieselbe Schlüsselnummer oder KBA-Nummer und weisen typischerweise den gleichen Motor auf) oder ein bestimmtes Kraftfahrzeugmodell weist daher typischerweise eine Anzahl Kraftfahrzeuge auf, die sich hinsichtlich der Kapazität des jeweiligen Bordnetz-Akkumulators oder der jeweiligen Bordnetz-Akkumulatoren unterscheiden, und zwar je nachdem, ob eine entsprechende (funktionsfähige oder funktionsbereite) bidirektionale Schnittstelle vorhanden ist und wie viele mobile Geräte und somit wie viele Geräte-Akkumulatoren an das Bordnetz ankoppelbar sind.

Als Folge weisen zum Beispiel einige Kraftfahrzeuge einer bestimmten Kraftfahrzeugklasse, einer bestimmten Baureihe oder Modellreihe, eines bestimmten Kraftfahrzeugtyps oder eines bestimmten Kraftfahrzeugmodells einen Bordnetz-Akkumulator oder mehrere Bordnetz-Akkumulatoren auf, der bzw. die zusammen über eine Kapazität von beispielsweise 20 Ah verfügen. Dies entspricht dann der vorgesehenen Gesamtkapazität und die entsprechenden Kraftfahrzeuge weisen keine (funktionsfähige oder funktionsbereite) bidirektionale Schnittstelle auf (Hierbei ist in einigen Fällen zwar hardwaretechnisch eine bidirektionale Schnittstelle verbaut, diese ist jedoch dann nicht funktionsfähig, also zum Beispiel deaktiviert.) und dementsprechend ist auch kein Geräte-Akkumulator an das jeweilige Bordnetz anbindbar. Andere Kraftfahrzeuge dieser bestimmten Kraftfahrzeugklasse, dieser bestimmten Baureihe oder Modellreihe, dieses bestimmten Kraftfahrzeugtyps oder dieses bestimmten Kraftfahrzeugmodells, die dagegen eine entsprechende (funktionsfähige oder funktionsbereite) bidirektionale Schnittstelle aufweisen, verfügen dann über einen Bordnetz-Akkumulator oder über mehrere Bordnetz-Akkumulatoren mit verringerter Kapazität, insbesondere entsprechend der Tabelle, also zum Beispiel mit einer Kapazität von 17 Ah, 15 Ah oder 10 Ah. In diesen Fällen ergibt dann die Kapazität des Bordnetz-Akkumulators bzw. der Bordnetz Akkumulatoren zusammen mit der Kapazität des zum entsprechenden Kraftfahrzeug zugehörigen mobilen Gerätes und dessen Geräte-Akkumulators oder zusammen mit den Geräte-Akkumulatoren, sofern beispielsweise zwei vorgesehen sind, wiederum die vorgesehene Gesamtkapazität von in diesem Beispiel 20 Ah. D. h. dass auch Kraftfahrzeuge einer (Produktions-)Charge mit unterschiedlichen Bordnetz-Akkumulatoren ausgestattet werden, wobei sich die Bordnetz-Akkumulatoren hinsichtlich ihrer Kapazität unterscheiden. Alternativ werden die Kraftfahrzeuge der Charge mit unterschiedlich vielen Bordnetz-Akkumulatoren ausgestattet.

Die bidirektionale Schnittstelle oder zumindest ein elektrisches oder elektronisches Koppelelement der bidirektionale Schnittstelle wird dabei beispielsweise durch einen schlichten Schalter oder eine Schalteinheit, beispielsweise gebildet durch zwei antiseriell geschaltete Halbleiterschalter, ausgebildet, der bzw. die den Bordnetz-Akkumulator und den Geräte-Akkumulator miteinander verbindet. Der Schalter bzw. die Schalteinheit ist dabei typischerweise als steuerbarer Schalter bzw. als steuerbare Schalteinheit ausgebildet und weist hierbei zum Beispiel ein Relais auf oder einen oder mehrere antiserielle Halbleiterschalter.

Ergänzend weist die bidirektionale Schnittstelle zudem typischerweise ein mechanisches Koppelelement auf, welches zweckdienlicherweise als Steckverbindung ausgebildet ist. Eine solche Steckverbindung ist hierbei weiter bevorzugt als magnetische Steckverbindung oder magnetisch geführte Steckverbindung ausgebildet, wie sie zum Beispiel in der DE 10 2014 216 783 A1 beschrieben ist.

Alternativ oder ergänzend bildet ein Gleichspannungswandler, kurz DC/DC-Wandler, das elektrische oder elektronische Koppelelement der bidirektionalen Schnittstelle aus, welcher insbesondere für einen Transfer hoher Leistungen und/oder hoher Ströme ausgelegt ist. Mit einem Gleichspannungswandler kann eine nahezu beliebige Spannungsdifferenz ab- oder aufgebaut werden und daher lassen sich die Akkumulatoren mit Hilfe eines derartigen elektrischen oder elektronischen Koppelelements relativ einfach auch auf unterschiedlichen Ladezuständen betrieben (z.B. Geräte-Akkumulator ist vollladen obwohl der Bordnetz-Akkumulator oder die Bordnetz-Akkumulatoren bei 70% Ladezustand ist bzw. sind).

Gemäß einer weiteren Ausführungsvariante ist der Gleichspannungswandler durch einen Bypass ergänzt. In diesem Fall wird dann das elektrische oder elektronische Koppelelement der bidirektionalen Schnittstelle beispielsweise durch eine Koppel-Schaltung ausgebildet, bei der ein Gleichspannungswandler, zum Beispiel ein Abwärtswandler (Buck Converter), ein Inverswandler (Buck-Boost Converter), ein monodirektionaler (nur für eine Richtung ausgelegt) Gleichspannungswandler oder ein bidirektionaler Gleichspannungswandler, parallel geschaltet ist zu einem den Bypass bildenden Schalter oder einer den Bypass bildenden Schalteinheit, die insbesondere als steuerbare Schalteinheit ausgebildet ist und zum Beispiel ein Relais aufweist oder einen oder mehrere antiserielle Halbleiterschalter, beispielsweise zwei antiseriell geschaltete MOSFETs. Der Bypass ist somit zum Beispiel allein durch eine Leiterverbindung mit zwei Halbleiterschaltern ausgebildet.

Dies hat den Vorteil, dass beispielsweise bei ausgeglichenen Ladezuständen die Leistung für Rekuperieren/Boosten nicht vom Gleichspannungswandler getrieben werden muss, sondern über den Bypass geleitet werden kann. Auf diese Weise lässt sich die Verlustleistung reduzieren und es besteht die Möglichkeit, einen einfacheren Gleichspannungswandler zu verwenden. Daher wird der Gleichspannungswandler dann weiter bevorzugt für eine geringere maximale Leistung ausgelegt, es wird also die Leistung des DC/DC-Wandlers reduziert beispielsweise von 3 kW auf 500 W. Der Gleichspannungswandler weist somit bevorzugt eine maximale Leistung kleiner gleich etwa 1 kW und weiter bevorzugt kleiner gleich etwa 500 W auf insbesondere bei einem Spannungsniveau von 48 V. Weiter sind der Gleichspannungswandler und der Bypass bevorzugt für unterschiedliche elektrische Leistungen und/oder Stromlasten oder Stromtragfähigkeiten ausgelegt und es werden dann typischerweise höhere zu übertragende elektrische Leistungen vorzugsweise über den Bypass übertragen. Der Bypass ist dann zum Beispiel für eine maximale Stromstärke von etwa 100 A, insbesondere jedoch zumindest größer 80 A, ausgelegt und der Gleichspannungswandler für eine maximale Stromstärke kleiner etwa 80 A und insbesondere kleiner etwa 60 A.

Der den Bypass bildende Schalter bzw. die den Bypass bildende Schalteinheit und/oder der DC/DC-Wandler ist bzw. sind außerdem zweckdienlicherweise steuerbar ausgebildet, wobei die Steuerung insbesondere durch die zuvor genannte Steuereinheit erfolgt, die hierfür eingerichtet ist. Hierbei erfolgt die Steuerung typischerweise in Abhängigkeit der Betriebssituation und/oder in Abhängigkeit der zu übertragenden elektrischen Leistung und/oder in Abhängigkeit der Stärke des zu übertragenden Stromes und/oder in Abhängigkeit der Potentialdifferenz zwischen den beiden Teilsystemen, die über das elektrische oder elektronische Koppelelement miteinander verbunden sind. Alternativ ist zumindest der Gleichspannungswandler derart ausgebildet, dass der Strom nur in eine Richtung fließen kann, also beispielsweise über den Gleichspannungswandler hin zum Geräte-Akkumulator (Über den Bypass, zumindest sofern dieser geschlossen ist, sollen dagegen bevorzugt sowohl die (Rekuperations-)Ströme zum Geräte-Akkumulator als auch die (Boost-)Ströme zum Bordnetz-Akkumulator über den Bypass fließen.). In diesem Fall ist der Gleichspannungswandler dann bevorzugt als monodirektionaler Gleichspannungswandler ausgelegt.

Erfolgt die Schaltung, insbesondere durch die Steuereinheit, auch oder allein in Abhängigkeit der Potentialdifferenz, so wird diese zum Beispiel erfasst als Spannung über dem Bypass bei geöffnetem Schalter bzw. bei geöffneter Schalteinheit oder als Potentialdifferenz über dem Gleichspannungswandler. Ist dann zum Beispiel bei einer vorgesehenen Bordnetzspannung von 48 V die erfasste Spannung bzw. Potentialdifferenz größer als 2 V, so bleibt der Schalter bzw. die Schalteinheit im geöffneten Zustand oder wird in den geöffneten Zustand überführt, so dass über den Bypass kein Strom fließen kann. Ist die erfasste Spannung bzw. Potentialdifferenz dagegen kleiner als 2 V, so bleibt der Schalter bzw. die Schalteinheit im geschlossenen Zustand oder wird in den geschlossenen Zustand überführt, so dass der Strom im Wesentlichen über den Bypass fließt. Das heißt, dass beispielsweise bei geöffnetem Schalter bzw. geöffneter Schalteinheit, also bei einer erfassten Spannung > 2 V, der Gleichspannungswandler genutzt wird, um diese erfasste Spannung abzubauen, so dass schließlich der Bypass geschlossen werden kann, oder um diese erfasste Spannung auszubauen, um zum Beispiel ein E-Bike weiterladen, um dessen Reichweite zu erhöhen.

Eine entsprechende Umschaltung, insbesondere durch die Steuereinheit, zwischen Stromfluss über den Gleichspannungswandler und Stromfluss über den Bypass muss jedoch nicht zwingend nach Art einer "harten" Umschaltung erfolgen, stattdessen wird in einigen Fällen ein Konzept realisiert mit einen überlappenden Bereich. Wird nun ausgegangen von einem Kraftfahrzeug mit einem 48V-Bordnetz, so wird die Spannungslage im Bordnetz beispielsweise je nach Batterieladezustand zwischen 46V und 50V schwanken. Ist des Weiteren ein "Last-Mile-Vehicle", also ein mobiles Gerät oder Sekundärfahrzeug, mit einem Geräte-Akkumulator mit derselben Spannungslage an das Bordnetz anbindbar, so sind insbesondere drei Fälle oder Betriebssituationen zu unterscheiden: Im ersten Fall ist der Geräte-Akkumulator des "Last-Mile-Vehicles" schwächer geladen als der Bordnetz-Akkumulator des Kraftfahrzeuges. Im zweiten Fall sind die beiden Ackumulatoren, also der Bordnetz-Akkumulator und der Geräte-Akkumulator, ähnlich stark geladen und im dritten Fall ist der Geräte-Akkumulator des "Last-Mile-Vehicles" stärker geladen als der Bordnetz-Akkumulator.

Wird das mobile Gerät, also das "Last-Mile-Vehicle", nach einer Nutzung wieder an das Bordnetz angekoppelt, so ist davon auszugehen, dass der Geräte-Akkumulator des "Last-Mile-Vehicles" entladen ist. Daher wird zunächst der Gleichspannungswandler oder DC/DC-Wandler verwendet, um kontrolliert Energie aus dem Bordnetz des Kraftfahrzeuges zu verwenden, um das "Last-Mile-Vehicle" zu laden. Durch das Aufladen steigt die Spannung des Geräte-Akkumulators.

Nach einiger Zeit, die Zeit variiert je nach Geräte-Akkumulator und Wandlerstärke des DC/DC-Wandlers, haben sich die Spannungen von Bordnetz-Akkumulator und Geräte-Akkumulator angeglichen. Nun wird der Bypass geschlossen, so dass der DC/DC-Wandler überbrückt ist und keine Energie mehr über diesen transferiert wird. Typische DC/DC-Wandler gehen jetzt in einen Ruhemodus. Bevorzugt erfolgt jedoch ein dediziertes Ausschalten durch Ansteuern des DC/DC-Wandlers.

Wenn nun absehbar ist, dass das "Last-Mile-Vehicle" in Kürze wieder genutzt wird, beispielsweise aufgrund von Informationen aus einem Navigationssystem, ist es sinnvoll und vorgesehen, dieses nicht mehr als Leistungsgeber zu nutzen und quasi "bis zum Anschlag" voll zu laden. Hierfür wird der DC/DC-Wandler wieder aktiviert und der Bypass wieder geöffnet. Das "Last-Mile-Vehicle" wird in der Folge bis zu seiner Maximalspannung geladen und es wird keine Energie mehr vom "Last-Mile-Vehicle" für Verbraucher im Kraftfahrzeug genutzt. Die Steuereinheit ist dann also zum Beispiel derart eingerichtet, dass zum Beispiel bei gegebener Routenplanung der DC/DC-Wandler beispielsweise ab einer Restdistanz zum Zielort von 5 km wieder aktiviert wird und der Bypass wieder geöffnet wird und das "Last-Mile-Vehicle" in der Folge bis zu seiner Maximalspannung geladen wird und keine Energie mehr vom "Last-Mile-Vehicle" für Verbraucher im Kraftfahrzeug genutzt wird.

Die Umschaltstrategie zwischen Gleichspannungswandler- und Bypassbetrieb ist in ihrer Abfolge typischerweise immer gleich, die Umschaltzeitpunkte werden aber beispielsweise abhängig von der verwendeten Zelltechnologie sowie der Auslegung der Hardware gewählt und bevorzugt im Steuergerät hinterlegt, beispielsweise in einem Speicher oder durch Programmierung. Sobald der Bypass geschlossen wird, fließt unkontrolliert viel Strom von der höheren Spannung zur niedrigeren Spannung. Dieser Strom ist abhängig von der Spannungsdifferenz und somit üblicherweise von der Ladezustandsdifferenz zum Schaltzeitpunkt, der elektrischen Qualität der Verbindung sowie der elektrischen Charakteristik der Zellen der Ackumulatoren, insbesondere im Falle von Lithium-Ionen-Akkumulatoren. Die Zeitpunkte werden somit unter Berücksichtigung dieser Aspekte festgelegt.

In dem Fall, dass das der Geräte-Akkumulator stärker geladen ist als der Bordnetz-Akkumulator, und zudem das Sekundärfahrzeug nicht in Kürze benutzt werden soll, wird der DC/DC-Wandler genutzt, um Energie in umgekehrter Richtung, also hin zum Bordnetz oder Bordnetz-Akkumulator, zu transferieren. Das "Last-Mile-Vehicle" oder vielmehr der Geräte-Akkumulator wird dabei kontrolliert an die Spannung des übrigen Bordnetzes des Kraftfahrzeuges angepasst. Alternativ, insbesondere wenn der DC/DC-Wandler nur für eine Richtung ausgelegt ist, wird auch direkt der Bypass geschlossen und eine unkontrollierte Anpassung der Spannungen ermöglicht. Hierbei können dann große Ströme auftreten und es wird sichergestellt, dass alle Komponenten dafür ausgelegt sind.

Unabhängig von der genauen Ausgestaltung ist die bidirektionale Schnittstelle und insbesondere das elektrische oder elektronische Koppelelement der bidirektionalen Schnittstelle dabei bevorzugt für eine hohe Stromtragfähigkeit ausgebildet. Das heißt, dass vorzugsweise elektrische Leistungen mit Strömen im Bereich 50 A bis 100 A (ein einzelnes mechanisches Koppelelement, also beispielsweise eine einzelne Buchse, kann dabei auch für etwa 50 A oder weniger ausgelegt sein und es können mehrere dieser einzelnen mechanischen Koppelelemente vorgesehen sein) über die bidirektionale Schnittstelle oder zumindest das elektrische oder elektronische Koppelelement der bidirektionalen Schnittstelle übertragen werden oder in die bidirektionale Schnittstelle eingespeist werden.

Von Vorteil ist es weiter, wenn das Kraftfahrzeug eine spezifische Aufnahme für den Geräte-Akkumulator und/oder das mobile Gerät aufweist, also eine Aufnahme, die speziell an den Geräte-Akkumulator und/oder das mobile Gerät angepasst ist. Ist die entsprechende Aufnahme dabei für den Geräte-Akkumulator ausgelegt, so ist diese beispielsweise als Schubfach, also Aufnahmeschale oder als Aufnahmeschacht ausgebildet, in die der Geräte-Akkumulator zur Ankoppelung an das Bordnetz eingelegt, eingeschoben oder eingesteckt wird. Die elektrische Verbindung zum Bordnetz wird hierbei entweder bereits durch die Positionierung des Geräte-Akkumulators in der entsprechenden Aufnahme hergestellt, also beispielsweise durch Berührungskontakte oder durch eine kapazitive und/oder induktive Koppelung, oder aber durch eine zusätzliche Verbindung, typischerweise eine Steckverbindung, beispielsweise mithilfe eines Verbindungskabels.

Alternativ dazu verbleibt der Geräte-Akkumulator im entsprechenden mobilen Gerät und wird in diesem Zustand an das Bordnetz angekoppelt. Dementsprechend ist die spezifische Aufnahme dann an das mobile Gerät angepasst und beispielsweise als Haltevorrichtung im Kofferraum, als Schubfach in einer Stoßstange des Kraftfahrzeuges, nach Art eines Dachträgers oder Heckträgers ausgestaltet. In einem solchen Fall ist dann die elektrische Anbindung des Geräte-Akkumulators an das Bordnetz über eine Kabelverbindung besonders zweckdienlich. Das entsprechende Kabel ist dabei beispielsweise Teil des Geräte-Akkumulators oder des mobilen Gerätes, Teil der bidirektionalen Schnittstelle oder aber als separates Kabel, also beispielsweise eine Art Verlängerungskabel, ausgebildet.

Das mobile Gerät ist als Sekundärfahrzeug oder "Last-Mile-Vehicle" mit Elektromotor ausgebildet, mit dem zum Beispiel die letzte Meile vom Abstellort des Kraftfahrzeuges hin zum eigentlichen Ziel und zurück zurückgelegt wird. Das Sekundärfahrzeug ist dabei insbesondere als Ein-Personen-Fahrzeug ausgelegt und bildet insbesondere ein sogenanntes Elektro-Longboard, ein sogenanntes Kickboard, ein sogenannter Scooter, einen sogenannten Elektro-Roller, einen sogenannten Tretroller, einen sogenannten Mini-Klapproller, ein sogenanntes Pedelec oder ein sogenanntes E-Bike aus. Entsprechende Sekundärfahrzeuge sind typischerweise problemlos in einem Kraftfahrzeug unterbringbar oder über einen Träger an einem Kraftfahrzeug befestigbar und weisen zudem einen Geräte-Akkumulator auf, dessen Leistungsdaten mit typischerweise in einem Kraftfahrzeug verbauten Akkumulatoren vergleichbar ist.

Die bidirektionale Schnittstelle weist einen Steckverbinder auf, welcher insbesondere als Buchse ausgebildet und beispielsweise im Kofferraum des Kraftfahrzeuges angeordnet ist. Der Steckverbinder bildet dabei quasi ein mechanisches Koppelelement aus und ist weiter bevorzugt Teil einer Steckverbindung, insbesondere einer magnetischen Steckverbindung oder magnetisch geführten Steckverbindung, wie sie zum Beispiel in der DE 10 2014 216 783 A1 beschrieben ist. Alternativ ist die bidirektionale Schnittstelle für eine kontaktlose Ankoppelung des Geräte-Akkumulators ausgelegt, also für eine induktive und/oder kapazitive Koppelung.

Von Vorteil ist zudem eine Ausgestaltung der bidirektionalen Schnittstelle, bei der diese für eine Betriebsspannung größer 20 V und insbesondere größer 40 V, also typischerweise 48 V, ausgebildet ist und dementsprechend in einem Bordnetz mit einer solchen Betriebsspannung eingesetzt wird. Zudem ist es zweckdienlich, wenn die bidirektionale Schnittstelle für eine Betriebsspannung kleiner 100V und insbesondere kleiner 60V ausgebildet ist. Günstig ist außerdem eine Ausgestaltung der bidirektionalen Schnittstelle, bei der diese für Lade- und Entladeströme für den Geräte-Akkumulator von etwa 50A bis 100A ausgebildet ist.

Weiter ist es je nach Anwendungsfall zweckdienlich, wenn die bidirektionale Schnittstelle für die Ankoppelung mehrerer Geräte-Akkumulatoren ausgebildet ist und/oder wenn das Kraftfahrzeug mehrere entsprechende bidirektionale Schnittstellen aufweist. Bei mehreren bidirektionalen Schnittstellen ist dann beispielsweise eine im Kofferraum des Kraftfahrzeuges angeordnet und eine in einem Schubfach in einer Stoßstange des Kraftfahrzeuges.

Wie bereits zuvor erwähnt ist es vorgesehen, dass ein entsprechender Geräte-Akkumulator im angekoppelten Zustand nicht ausschließlich als Last dient, sondern in zumindest in einer Betriebssituation, einem Betriebsmodus oder Betriebszustand auch als Energiequelle im Bordnetz oder für das Bordnetz. Daher ist es von Vorteil, wenn der Bordnetz-Akkumulator und die mittels der bidirektionalen Schnittstelle ankoppelbaren Geräte-Akkumulatoren ein Akkumulator-System mit einer Gesamtkapazität ausbilden, die insbesondere an das Kraftfahrzeug und dessen Bordnetz angepasst und für dieses ausgelegt ist. Das heißt also, dass beispielsweise der Bordnetz-Akkumulator etwas kleiner und schwächer ausgelegt wird als üblich, da der Geräte-Akkumulator typischerweise zusätzlich zur Verfügung steht und somit eine geringere Kapazität ausgleichen kann.

Je nach Ausgestaltungsvariante ist dabei die Gesamtkapazität des Akkumulator-Systems größer als 5 Ah und insbesondere größer als 10 Ah. Zudem ist die Gesamtkapazität typischerweise kleiner als 40 Ah und insbesondere kleiner als 30 Ah.

Dabei ist das Verhältnis von Kapazität des Bordnetz-Akkumulators zu Gesamtkapazität bevorzugt größer 0,3 und insbesondere größer 0,4. Zudem ist das Verhältnis von Kapazität des Bordnetz-Akkumulators zu Gesamtkapazität vorzugsweise kleiner 0,8 und insbesondere kleiner 0,6.

In jedem Fall ist der Bordnetz-Akkumulator dabei bevorzugt derart ausgelegt, dass das Kraftfahrzeug auch dann betriebsbereit/fahrbereit ist, wenn kein Geräte-Akkumulator an das Bordnetz angekoppelt ist.

Außerdem ist es zweckdienlich, wenn das Bordnetz des Kraftfahrzeuges, wie bereits zuvor dargelegt, eine Steuereinheit aufweist, welche eingerichtet ist, angekoppelte Geräte-Akkumulatoren zu erkennen und Ströme in die sowie aus den angekoppelten Geräte-Akkumulatoren zu steuern. Die Steuereinheit ist dabei insbesondere derart eingerichtet, dass in zumindest einem Betriebsmodus bei Bedarf auch elektrische Leistung aus den angekoppelten Geräte-Akkumulatoren herausgezogen wird.

Je nach Ausgestaltung des Kraftfahrzeuges weist dieses weiter einen elektrisch angetriebenen Verdichter auf, der einen elektrischen Verbraucher im Bordnetz des Kraftfahrzeuges ausbildet. Ein entsprechender Verdichter dient dabei zur Verdichtung von Frischluft für einen Verbrennungsmotor, wirkt also als eine Art Turbolader oder Kompressor, und benötigt situationsbedingt kurzzeitig relativ hohe elektrische Leistungen.

Des Weiteren weist das Kraftfahrzeug in einigen Fällen zumindest einen aktiven Wankstabilisator auf, der im Bordnetz des Kraftfahrzeuges als elektrischer Verbraucher wirkt.

Außerdem weist das Kraftfahrzeug je nach Ausgestaltung ein Bordnetz mit zumindest einem Primärnetz und einem Sekundärnetz auf, wobei das Primärnetz für eine im Vergleich zum Sekundärnetz höhere Betriebsspannung ausgebildet ist und wobei das Primärnetz den Generator, den Bordnetz-Akkumulator sowie die bidirektionale Schnittstelle aufweist. Dabei ist das Primärnetz beispielsweise für eine Betriebsspannung von 48 V ausgelegt und das Sekundärnetz beispielsweise für eine Betriebsspannung von 12 V oder 24 V. Das Primärnetz und das Sekundärnetz sind hierbei bevorzugt über einen Umrichter miteinander verbunden.

Ausführungsbeispiele der Erfindung werden nachfolgend anhand einer schematischen Zeichnung näher erläutert. Darin zeigen:
- FIG 1: in einer Blockschaltbilddarstellung eine erste Ausführung eines Kraftfahrzeuges mit einer bidirektionalen Schnittstelle für einen Geräte-Akkumulator sowie
- FIG 2: in einer Blockschaltbilddarstellung eine zweite Ausführung des Kraftfahrzeuges mit einer bidirektionalen Schnittstelle für einen Geräte-Akkumulator.

Einander entsprechende Teile sind in allen Figuren jeweils mit den gleichen Bezugszeichen versehen.

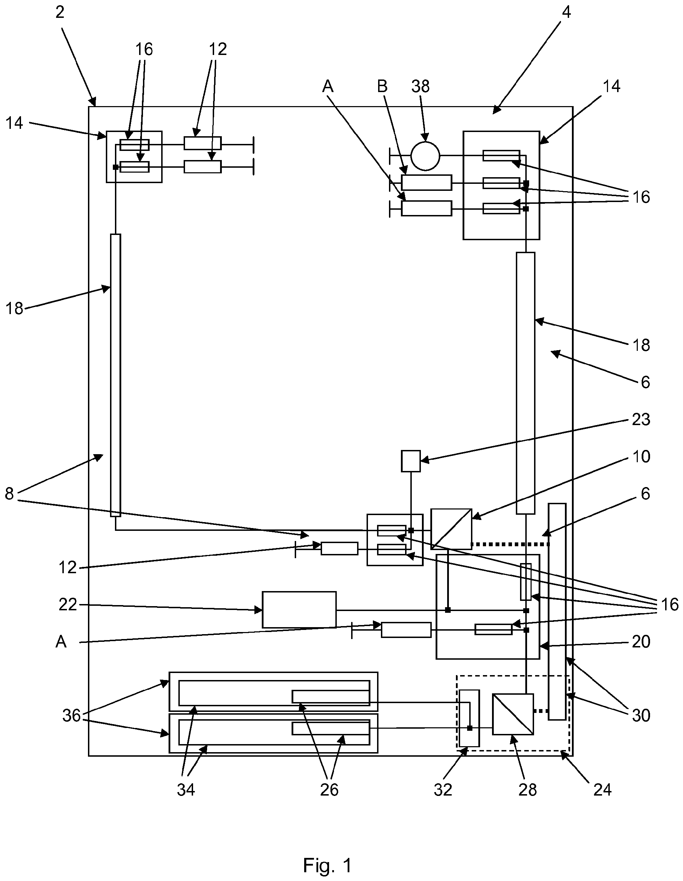

Ein nachfolgend exemplarisch beschriebenes und in Fig. 1 dargestelltes Kraftfahrzeug 2 ist beispielsweise als Personenkraftwagen ausgebildet und weist ein Gleichspannungsbordnetz 4, nachfolgend kurz Bordnetz 4 genannt, auf, welches bevorzugt aus einem Primärnetz 6 und einem Sekundärnetz 8 aufgebaut ist. Dabei sind die beiden Teilnetze 6, 8, also das Primärnetz 6 einerseits und das Sekundärnetz 8 andererseits, für unterschiedliche Betriebsspannungen ausgelegt und über einen Netzumrichter 10 miteinander verbunden. Hierbei ist das Primärnetz 6 im Ausführungsbeispiel für eine Betriebsspannung von 48V ausgelegt und das Sekundärnetz 8 ist für eine Betriebsspannung von 24V oder alternativ 12V ausgelegt.

Das Primärnetz 6 weist weiter, ebenso wie das Sekundärnetz 8, mehrere elektrische Verbraucher 12 auf, die typischerweise über sogenannte Verteiler 14 in das Primärnetz 6 bzw. in das Sekundärnetz 8 und somit in das Bordnetz 4 eingebunden sind. Dabei sind häufig in die entsprechenden Verteiler 14 Sicherungen 16, typischerweise sogenannte Schmelzsicherungen, integriert, durch die die angebundenen elektrischen Verbraucher 12 gegen Überströme abgesichert sind. Entsprechende Verteiler 14 und entsprechende elektrische Verbraucher 12 sind dabei im gesamten Kraftfahrzeug 2 verteilt angeordnet, also zum Beispiel auch im Motorraum und im Bereich des Hecks. Dabei sind im Ausführungsbeispiel die dem Motorraum angeordneten Verteiler 14 über sogenannte Unterflurverkabelungen 18 mit einem Hauptverteiler 20 verbunden, der im Heck des Kraftfahrzeuges 2 positioniert ist.

An jenem Hauptverteiler 20, der Teil des Primärnetzes 6 ist, ist ein Bordnetz-Akkumulator 22 angebunden, der als Energiequelle und Energiespeicher die Versorgung der elektrischen Verbraucher 12 sicherstellt. Der Bordnetz-Akkumulator 22 ist dabei bevorzugt als sogenannte Starter-Batterie ausgebildet und für eine Versorgungsspannung von 48V ausgelegt. Dementsprechend ist der Bordnetz-Akkumulator 22 dann vorzugsweise nicht als Antriebs-Akkumulator ausgebildet. Außerdem ist im Ausführungsbeispiel der Netzumrichter 10 an den Hauptverteiler 20 angebunden und direkt mit Bordnetz-Akkumulator 22 verbunden. Im Sekundärnetz 8 ist zudem noch ein 12V-Akkumulator 23 als eine Art Energiepuffer an den Netzumrichter 10 angebunden. Ein solcher Energiepuffer ist häufig notwendig, da der Netzumrichter 10 in den meisten Ausführungen zu träge für schnelle Änderungen in der Leistungsanforderung ist.

Teil des Bordnetzes 4 ist weiterhin eine bidirektionale Schnittstelle 24, über die sich im Ausführungsbeispiel bis zu zwei Geräte-Akkumulatoren 26 in das Bordnetz 4 einbinden oder an das Bordnetz 4 anschließen lassen. Jene bidirektionale Schnittstelle 24 umfasst dabei im Ausführungsbeispiel gemäß Fig. 1 einen Schnittstellen-Umrichter 28, genauer einen Gleichspannungswandler, als elektrisches oder elektronisches Koppelelement sowie eine Steuereinheit 30, welche eingerichtet ist, angekoppelte oder angeschlossene Geräte-Akkumulatoren 26 zu erkennen und Ströme in die sowie aus den angekoppelten Geräte-Akkumulatoren 26 zu steuern. Die Steuereinheit 30 ist hierbei im einfachsten Fall durch eine zentrale Steuereinheit 30 für das Bordnetz 4 ausgebildet. Desweiteren weist die bidirektionale Schnittstelle 24 als mechanisches Koppelelement einen Steckverbinder 32 auf, der im Ausführungsbeispiel durch zwei nicht näher dargestellte Buchsen ausgebildet ist, sodass sich je ein Geräte-Akkumulator 26 über eine Buchse mit dem Bordnetz 4 verbinden lässt.

Ein entsprechender Geräte-Akkumulator 26 ist typischerweise Teil eines Sekundärfahrzeugs 34 mit Elektromotor, also zum Beispiel Teil eines sogenannten Elektro-Rollers oder eines eBikes. Ein solches Sekundärfahrzeug 34 ist insbesondere als Ein-Personen-Fahrzeug für die sogenannte letzte Meile vorgesehen, also für den Weg vom Abstellort des Kraftfahrzeuges 2 hin zum eigentlichen Ziel und gegebenenfalls zurück. Dementsprechend wird ein solches Sekundärfahrzeug 34 häufig mit dem Kraftfahrzeug 2 mitgeführt und aus diesem Grund weist das Kraftfahrzeug 2 zwei spezifische Aufnahmen 36 auf, die an ein solches Sekundärfahrzeug 34 angepasst sind und in denen ein entsprechendes Sekundärfahrzeug 34 platziert und gesichert werden kann. Das heißt, dass ein entsprechendes Sekundärfahrzeug 34 zunächst in einer dafür vorgesehenen Aufnahme 36 beispielsweise im Kofferraum des Kraftfahrzeuges 2 positioniert und arretiert wird und dass nachfolgend zum Beispiel mit Hilfe eines Verbindungskabels die elektrische Verbindung zum Bordnetz 4 hergestellt wird. Alternativ wird die elektrische Verbindung zum Bordnetz 4 allein durch die Positionierung in der Aufnahme 36 erreicht, beispielsweise mit Hilfe von Berührungskontakten oder durch kapazitive und/oder induktive Koppelung.

Ist dann zumindest ein entsprechender Geräte-Akkumulator 26 an das Bordnetz 4 angekoppelt, so wird dies von der Steuereinheit 30 erkannt und nachfolgend wird in zumindest einem Betriebsmodus während des Betriebs des Kraftfahrzeuges 2 der Geräte-Akkumulator 26 als elektrische Energiequelle im Bordnetz 4 genutzt, also insbesondere zur Versorgung elektrischer Verbraucher 12. Ein entsprechend angebundener Geräte-Akkumulator 26 wird dabei insbesondere genutzt, um kurzzeitige Lastspitzen zu kompensieren, während bei geringerem Leistungsbedarf im Bordnetz 4 der Geräte-Akkumulator 26 typischerweise über das Bordnetz 4 aufgeladen wird.

Da sich gemäß dem zuvor beschriebenen Prinzip Lastspitzen mit Hilfe angeschlossener Geräte-Akkumulatoren 26 kompensieren lassen, kann der Bordnetz-Akkumulator 22 tendenziell kleiner als eine übliche Starterbatterie dimensioniert werden. Das heißt, dass bevorzugt für das Kraftfahrzeug 2 nunmehr ein Akkumulator-System vorgegeben wird, welches für das derzeit übliche Anwendungsszenario ausgelegt ist und eine hierfür geeignete Gesamtkapazität aufweist, also die Gesamtkapazität einer üblichen Starterbatterie. Diese Gesamtkapazität entspricht dabei im Ausführungsbeispiel der derzeit üblichen Gesamtkapazität von beispielsweise 20Ah bei einer Betriebsspannung oder Versorgungsspannung von 48V. Da die zwei Geräte-Akkumulatoren 26 für eine Versorgungsspannung von 48V ausgelegt sind und jeweils eine Kapazität von 5,5Ah aufweisen, muss die Kapazität des Bordnetz-Akkumulators 22 entsprechend dem hier vorgestellten Konzept mit dem Akkumulator-System lediglich etwa 9Ah betragen, um auf eine Gesamtkapazität von 20Ah für das Akkumulator-System zu kommen. Dementsprechend weist das Kraftfahrzeug 2 im Ausführungsbeispiel einen Bordnetz-Akkumulator 22 mit verringerter Kapazität von 9Ah auf.

Außerdem umfasst das Bordnetz 4 im Ausführungsbeispiel einen Generator 38, genauer eine sogenannte Lichtmaschine, einen elektrisch angetriebenen Verdichter B zur Verdichtung von Frischluft für einen Verbrennungsmotor des Kraftfahrzeuges 2 sowie je einen aktiven Wankstabilisator A an der Vorderachse und an der Hinterachse des Kraftfahrzeuges 2. Der Generator 38 wird dabei im Fahrbetrieb des Kraftfahrzeuges 2 zumindest zeitweise zum Aufladen der angekoppelten Geräte-Akkumulatoren 26 genutzt, während der elektrisch angetriebenen Verdichter B und die aktiven Wankstabilisatoren A im Fahrbetrieb des Kraftfahrzeuges 2 zumindest zeitweise Lastspitzen im Bordnetz 4 hervorrufen.

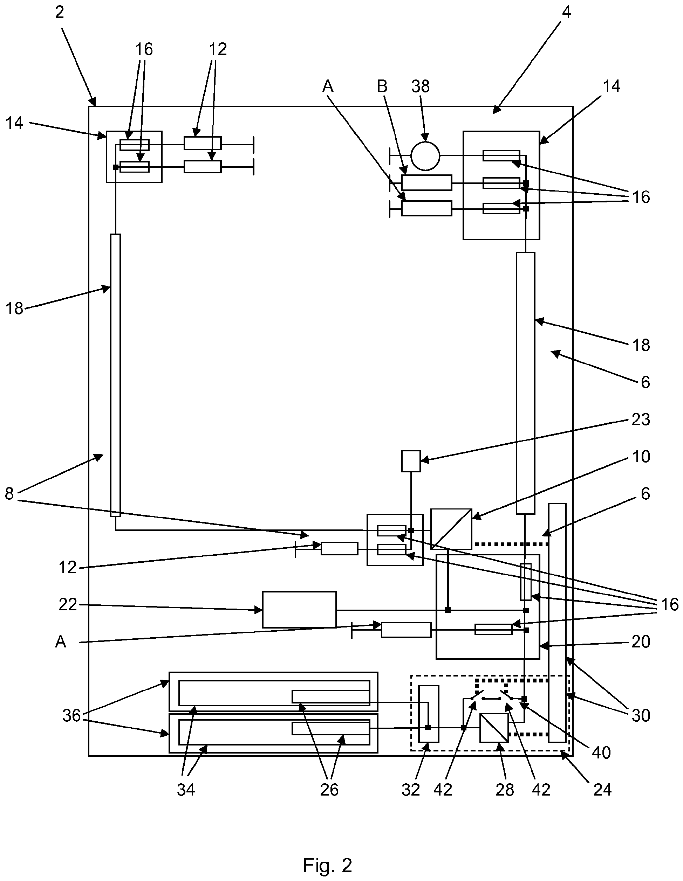

Ein weiteres Ausführungsbeispiel ist in Fig. 2 wiedergegeben, wobei sich dieses vom Ausführungsbeispiel gemäß Fig. 1 durch die Ausgestaltung des elektrischen oder elektronischen Koppelelements unterscheidet. Dieses ist im Ausführungsbeispiel gemäß Fig. 2 durch eine Schaltung gegeben, bei der der Schnittstellen-Umrichter 28 durch einen Bypass 40 ergänzt ist. Dieser Bypass 40 ist durch zwei ansteuerbare antiseriell geschaltete Halbleiterschalter 42 ausgebildet, über die sich der Schnittstellen-Umrichter 28 überbrücken lässt.

Die Ansteuerung der Halbleiterschalter 42 erfolgt dabei bevorzugt durch die Steuereinheit 30 und typischerweise in Abhängigkeit der Betriebssituation und/oder in Abhängigkeit der Potentialdifferenz zwischen den beiden Teilsystemen, die über das elektrische oder elektronische Koppelelement miteinander verbunden sind. Erfolgt die Schaltung auch oder allein in Abhängigkeit der Potentialdifferenz, so wird diese zum Beispiel erfasst als Spannung über dem Bypass 40 bei geöffneten Halbleiterschaltern 42 oder als Potentialdifferenz über dem Gleichspannungswandler, also hier dem Schnittstellen-Umrichter 28. Ist dann zum Beispiel bei einer vorgesehenen Bordnetzspannung von 48 V die erfasste Spannung bzw. Potentialdifferenz größer als 2 V, so bleiben die Halbleiterschalter 42 im geöffneten Zustand oder sie werden in den geöffneten Zustand überführt, so dass über den Bypass 40 kein Strom fließen kann. Ist die erfasste Spannung bzw. Potentialdifferenz dagegen kleiner als 2 V, so bleiben die Halbleiterschalter 42 im geschlossenen Zustand oder die Halbleiterschalter 42 werden in den geschlossenen Zustand überführt, so dass der Strom im Wesentlichen über den Bypass 40 fließt.

Die Spannung über dem Bypass 40 bei geöffneten Halbleiterschaltern 42 und/oder die Potentialdifferenz über dem Gleichspannungswandler, also hier dem Schnittstellen-Umrichter 28, wird weiter bevorzugt mittels einer nicht dargestellten oder in die Steuereinheit 30 integrierten Messvorrichtung erfasst und der Steuereinheit als Information zur Verfügung gestellt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

## Patentansprüche

1. Kraftfahrzeug (2), insbesondere Personenkraftwagen (2), aufweisend ein Bordnetz (4) mit einer Anzahl elektrischer Verbraucher (12), mit einem Generator (38) sowie mit einem Bordnetz-Akkumulator (22)
**gekennzeichnet durch**
eine bidirektionale Schnittstelle (24) für einen Geräte-Akkumulator (26) eines mit einem Elektromotor ausgebildeten Sekundärfahrzeugs (34) derart, dass der Geräte- Akkumulator (26) über die bidirektionale Schnittstelle (24) an das Bordnetz (4) über eine Steckverbindung oder kontaktlos ankoppelbar ist und im angekoppelten Zustand einerseits durch das Bordnetz (4) ladbar und andererseits im Bordnetz (4) als zusätzliche Energiequelle nutzbar ist.

2. Kraftfahrzeug (2) nach Anspruch 1
**gekennzeichnet durch**
eine spezifische Aufnahme (36) für den Geräte-Akkumulator (26) und/oder das Sekundärfahrzeug (34).

3. Kraftfahrzeug (2) nach einem der Ansprüche 1 bis 2,
**dadurch gekennzeichnet,**
**dass** die bidirektionale Schnittstelle (24) ein elektrisches oder elektronisches Koppelelement (28,40) aufweist, welches einen Gleichspannungswandler (28) und einen parallel zu diesem geschalteten Bypass (40) aufweist..

4. Kraftfahrzeug (2) nach Anspruch 3,
**dadurch gekennzeichnet,**
**dass** das Bordnetz (4) eine Steuereinheit (30) aufweist, welche eingerichtet ist, Ströme über die bidirektionale Schnittstelle (24) in die sowie aus den angekoppelten Geräte-Akkumulatoren (26) zu steuern, insbesondere in Abhängigkeit einer Betriebssituation, einer über die bidirektionale Schnittstelle (24) zu überbrückenden Potentialdifferenz, der über die bidirektionale Schnittstelle (24) zu übertragenden elektrischen Leistung, oder eines Anwendungsszenarios.

5. Kraftfahrzeug (2) nach Anspruch 4,
**dadurch gekennzeichnet,**
**dass** die Steuereinheit (30) eingerichtet ist, das elektrische oder elektronische Koppelelement (28,40) derart anzusteuern, dass die zu übertragende elektrische Leistung vorwiegend über den Gleichspannungswandler (28) übertragen wird, wenn die zu übertragende elektrische Leistung kleiner 1 kW ist, und vorwiegend über den parallel zu diesem geschalteten Bypass (40) übertragen wird, wenn die zu übertragende elektrische Leistung größer 1 kW ist.

6. Kraftfahrzeug (2) nach einem der Ansprüche 3 bis 5,
**dadurch gekennzeichnet,**
**dass** der Gleichspannungswandler (28) und der parallel zu diesem geschaltete Bypass (40) für unterschiedliche Stromtraglasten ausgelegt sind.

7. Kraftfahrzeug (2) nach einem der Ansprüche 1 bis 6,
**dadurch gekennzeichnet,**
**dass** die bidirektionale Schnittstelle (24) für eine Betriebsspannung größer 20V und insbesondere größer 40V ausgebildet ist.

8. Kraftfahrzeug (2) nach einem der Ansprüche 1 bis 7,
**dadurch gekennzeichnet,**
**dass** die bidirektionale Schnittstelle (24) für mehrere Geräte-Akkumulatoren (26) ausgebildet ist.

9. Kraftfahrzeug (2) nach einem der Ansprüche 1 bis 8,
**dadurch gekennzeichnet,**
**dass** der Bordnetz-Akkumulator (22) und die mittels der bidirektionalen Schnittstelle (24) ankoppelbaren Geräte-Akkumulatoren (26) ein Akkumulator-System mit einer Gesamtkapazität ausbilden, die größer als 5Ah und insbesondere größer als 10Ah ist.

10. Kraftfahrzeug (2) nach Anspruch 9,
**dadurch gekennzeichnet,**
**dass** das Verhältnis von Kapazität des Bordnetz-Akkumulators (22) zu Gesamtkapazität des Akkumulator-Systems größer 0,3 und insbesondere größer 0,4 ist.

11. Kraftfahrzeug (2) nach einem der Ansprüche 9 oder 10,
**dadurch gekennzeichnet,**
**dass** das Verhältnis von Kapazität des Bordnetz-Akkumulators (22) zu Gesamtkapazität des Akkumulator-Systems kleiner 0,8 und insbesondere kleiner 0,6 ist.

12. Kraftfahrzeug (2) nach einem der Ansprüche 1 bis 11,
**dadurch gekennzeichnet,**
**dass** das Bordnetz (4) eine Steuereinheit (30) aufweist, welche eingerichtet ist, angekoppelte Geräte-Akkumulatoren (26) zu erkennen und Ströme in die sowie aus den angekoppelten Geräte-Akkumulatoren (26) zu steuern, wobei insbesondere in einem Betriebsmodus elektrische Leistung aus den angekoppelten Geräte-Akkumulatoren (26) gezogen wird.

13. Kraftfahrzeug (2) nach einem der Ansprüche 1 bis 12,
**dadurch gekennzeichnet,**
**dass** einer der elektrischen Verbraucher (12) einen elektrisch angetriebenen Verdichter (B) oder einen aktiven Wankstabilisator (B) mitausbildet.

14. Kraftfahrzeug (2) nach einem der Ansprüche 1 bis 13,
**dadurch gekennzeichnet,**
**dass** das Bordnetz (4) zumindest ein Primärnetz (6) sowie ein Sekundärnetz (8) aufweist, wobei das Primärnetz (6) für eine im Vergleich zum Sekundärnetz (8) höhere Betriebsspannung ausgebildet ist und wobei das Primärnetz (6) den Generator (38), den Bordnetz-Akkumulator (22) sowie die bidirektionale Schnittstelle (24) aufweist.

15. Kraftfahrzeug (2) nach einem der Ansprüche 1 bis 14,
**dadurch gekennzeichnet,**
**dass** dieses Teil einer Baureihe ist, wobei sich die Kraftfahrzeuge der Baureihe hinsichtlich der Kapazitäten der verbauten Bordnetz-Akkumulatoren unterscheiden und wobei die Kapazitäten der verbauten Bordnetz-Akkumulatoren (22) bei den Kraftfahrzeugen (2) der Baureihe, die die bidirektionale Schnittstelle (24) aufweisen, reduziert sind gegenüber den Kapazitäten der verbauten Bordnetz-Akkumulatoren bei den Kraftfahrzeugen der Baureihe, die die bidirektionale Schnittstelle (24) nicht aufweisen.

## Claims

1. A power-driven vehicle (2), in particular a passenger car (2), having an on-board electrical system (4) with a number of electrical loads (12), with a generator (38), and with an on-board electrical system accumulator (22),
**characterised by**
a bidirectional interface (24) for a device accumulator (26) of a secondary vehicle (34) which is designed with an electric motor so that the device accumulator (26) can be coupled via the bidirectional interface (24) to the on-board electrical system (4) via a plug connection or in a contactless manner, and, in the coupled state, is on the one hand chargeable by the on-board electrical system (4), and is on the other hand usable as an additional energy source in the on-board electrical system (4).

2. The power-driven vehicle (2) according to claim 1,
**characterised by**
a specific receptacle (36) for the device accumulator (26) and/or the secondary vehicle (34).

3. The power-driven vehicle (2) according to any one of the claims 1 to 2,
**characterised in that**
the bidirectional interface (24) has an electrical or electronic coupling element (28, 40) which has a DC voltage converter (28) and a bypass (40) connected in parallel thereto.

4. The power-driven vehicle (2) according to claim 3,
**characterised in that**
the on-board electrical system (4) has a control unit (30) which is configured to control currents via the bidirectional interface (24) into and out of the coupled device accumulators (26), in particular depending on an operating situation, a potential difference to be bridged via the bidirectional interface (24), the electrical power to be transmitted via the bidirectional interface (24), or an application scenario.

5. The power-driven vehicle (2) according to claim 4,
**characterised in that**
the control unit (30) is configured to control the electrical or electronic coupling element (28, 40) so that the electrical power to be transmitted is transmitted predominantly via the DC voltage converter (28) if the electrical power to be transmitted is less than 1 kW, and is transmitted predominantly via the bypass (40) connected in parallel thereto if the electrical power to be transmitted is greater than 1 kW.

6. The power-driven vehicle (2) according to any one of the claims 3 to 5,
**characterised in that**
the DC voltage converter (28) and the bypass (40) connected in parallel thereto are designed for different current carrying loads.

7. The power-driven vehicle (2) according to any one of the claims 1 to 6,
**characterised in that**
the bidirectional interface (24) is designed for an operating voltage greater than 20 V and in particular greater than 40 V.

8. The power-driven vehicle (2) according to any one of the claims 1 to 7,
**characterised in that**
the bidirectional interface (24) is designed for multiple device accumulators (26).

9. The power-driven vehicle (2) according to any one of the claims 1 to 8,
**characterised in that**
the on-board electrical system accumulator (22) and the device accumulators (26) which can be coupled thereto by means of the bidirectional interface (24) form an accumulator system with a total capacity which is greater than 5 Ah and in particular greater than 10 Ah.

10. The power-driven vehicle (2) according to claim 9,
**characterised in that**
the ratio of capacity of the on-board electrical system accumulator (22) to total capacity of the accumulator system is greater than 0.3 and in particular greater than 0.4.

11. The power-driven vehicle (2) according to any one of the claims 9 or 10,
**characterised in that**
the ratio of capacity of the on-board electrical system accumulator (22) to total capacity of the accumulator system is less than 0.8 and in particular less than 0.6.

12. The power-driven vehicle (2) according to any one of the claims 1 to 11,
**characterised in that**
the on-board electrical system (4) has a control unit (30) which is configured to detect coupled device accumulators (26) and to control currents into and out of the coupled device accumulators (26), wherein in particular in an operating mode electrical power is being drawn from the coupled device accumulators (26).

13. The power-driven vehicle (2) according to any one of the claims 1 to 12,
**characterised in that**
one of the electrical loads (12) co-forms an electrically driven compressor (B) or an active roll stabilizer (B).

14. The power-driven vehicle (2) according to any one of the claims 1 to 13,
**characterised in that**
the on-board electrical system (4) has at least a primary electrical system (6) and a secondary electrical system (8), wherein the primary electrical system (6) is designed for a higher operating voltage in comparison with the secondary electrical system (8), and wherein the primary electrical system (6) has the generator (38), the on-board electrical system accumulator (22), and the bidirectional interface (24).

15. The power-driven vehicle (2) according to any one of the claims 1 to 14,
**characterised in that**
the latter is part of a series, wherein the power-driven vehicles of the series differ with respect to the capacities of the installed on-board electrical system accumulators, and wherein the capacities of the installed on-board electrical system accumulators (22) in the power-driven vehicles (2) of the series which have the bidirectional interface (24) are reduced compared with the capacities of the installed on-board electrical system accumulators in the power-driven vehicles of the series which do not have the bidirectional interface (24).

## Revendications

1. Véhicule à moteur (2), en particulier voiture particulière (2), comportant un réseau de bord (4) doté d'un certain nombre de consommateurs électriques (12), d'un générateur (38) ainsi que d'un accumulateur (22) de réseau de bord,
**caractérisé par**
une interface bidirectionnelle (24) pour un accumulateur (26) d'appareil d'un véhicule secondaire (34) configuré avec un moteur électrique, de sorte que l'accumulateur (26) d'appareil peut être couplé sans contact ou au moyen d'un connecteur à fiches au réseau de bord (4) via l'interface bidirectionnelle (24) et peut, dans l'état couplé, d'une part être chargé par le réseau de bord (4) et d'autre part être utilisé comme source d'énergie supplémentaire dans le réseau de bord (4).

2. Véhicule à moteur (2) selon la revendication 1,
**caractérisé par**
un logement spécifique (36) pour l'accumulateur (26) d'appareil et/ou le véhicule secondaire (34).

3. Véhicule à moteur (2) selon l'une quelconque des revendications 1 et 2,
**caractérisé en ce que**
l'interface bidirectionnelle (24) comporte un élément de couplage (28, 40) électrique ou électronique, qui est doté d'un convertisseur continu-continu (28) et d'une dérivation (40) connectée en parallèle à ce dernier.

4. Véhicule à moteur (2) selon la revendication 3,
**caractérisé en ce que**
le réseau de bord (4) comporte une unité de réglage (30) qui est conçue pour régler via l'interface bidirectionnelle (24) des courants entrant dans les ainsi que sortant des accumulateurs (26) d'appareils, notamment en fonction d'une situation de fonctionnement, d'une différence de potentiel où l'interface bidirectionnelle (24) servirait de passerelle, de la puissance électrique à transmettre via l'interface bidirectionnelle (24), ou d'un scénario d'application.

5. Véhicule à moteur (2) selon la revendication 4,
**caractérisé en ce que**
l'unité de réglage (30) est conçue pour régler l'élément de couplage (28, 40) électrique ou électronique de manière que la puissance électrique à transmettre soit transmise principalement via le convertisseur continu-continu (28), lorsque la puissance électrique à transmettre est inférieure à 1 kW, et soit transmise principalement via la dérivation (40) connectée en parallèle à ce dernier, lorsque la puissance électrique à transmettre est supérieure à 1 kW.

6. Véhicule à moteur (2) selon l'une quelconque des revendications 3 à 5,
**caractérisé en ce que**
le convertisseur continu-continu (28) et la dérivation (40) connectée en parallèle à ce dernier sont disposés pour des charges de transfert de courant différentes.

7. Véhicule à moteur (2) selon l'une quelconque des revendications 1 à 6,
**caractérisé en ce que**
l'interface bidirectionnelle (24) est configurée pour une tension de fonctionnement supérieure à 20 V et en particulier supérieure à 40 V.

8. Véhicule à moteur (2) selon l'une quelconque des revendications 1 à 7,
**caractérisé en ce que**
l'interface bidirectionnelle (24) est configurée pour plusieurs accumulateurs (26) d'appareils.

9. Véhicule à moteur (2) selon l'une quelconque des revendications 1 à 8,
**caractérisé en ce que**
l'accumulateur (22) de réseau de bord et les accumulateurs (26) d'appareils pouvant être couplés au moyen de l'interface bidirectionnelle (24) constituent un système d'accumulateurs ayant une capacité totale qui est supérieure à 5 Ah et en particulier supérieure à 10 Ah.

10. Véhicule à moteur (2) selon la revendication 9,
**caractérisé en ce que**
le rapport de la capacité de l'accumulateur (22) de réseau de bord à la capacité totale du système d'accumulateurs est supérieur à 0,3 et en particulier supérieur à 0,4.

11. Véhicule à moteur (2) selon l'une quelconque des revendications 9 et 10,
**caractérisé en ce que**
le rapport de la capacité de l'accumulateur (22) de réseau de bord à la capacité totale du système d'accumulateurs est inférieur à 0,8 et en particulier inférieur à 0,6.

12. Véhicule à moteur (2) selon l'une quelconque des revendications 1 à 11,
**caractérisé en ce que**
le réseau de bord (4) comporte une unité de réglage (30) qui est conçue pour reconnaître des accumulateurs (26) d'appareils couplés et régler des courants entrant dans les ainsi que sortant des accumulateurs (26) d'appareils couplés, en particulier dans un module de fonctionnement de la puissance électrique étant extraite des accumulateurs (26) d'appareils couplés.

13. Véhicule à moteur (2) selon l'une quelconque des revendications 1 à 12,
**caractérisé en ce que**
l'un des consommateurs électriques (12) consiste en un compresseur (B) entraîné électriquement ou un stabilisateur de roulis (B) actif.

14. Véhicule à moteur (2) selon l'une quelconque des revendications 1 à 13,
**caractérisé en ce que**
le réseau de bord (4) comporte au moins un réseau primaire (6) ainsi qu'un réseau secondaire (8), le réseau primaire (6) étant configuré pour une tension de fonctionnement plus élevée en comparaison du réseau secondaire (8) et le réseau primaire (6) comportant le générateur (38), l'accumulateur (22) de réseau de bord ainsi que l'interface bidirectionnelle (24).

15. Véhicule à moteur (2) selon l'une quelconque des revendications 1 à 14,
**caractérisé en ce que**
celui-ci fait partie d'une série de fabrication, les véhicules à moteur de la série de fabrication étant différents en ce qui concerne les capacités des accumulateurs de réseau de bord montés et les capacités des accumulateurs (22) de réseau de bord montés étant réduites dans les véhicules à moteur (2) de la série de fabrication qui comportent l'interface bidirectionnelle (24), par rapport aux capacités des accumulateurs de réseau de bord montés dans les véhicules à moteur de la série de fabrication qui ne comportent pas l'interface bidirectionnelle (24).
